Europäisches Patentamt

European Patent Office

Office européen des brevets

(19)

(11) Numéro de publication : **0 003 195**
**B1**

(12) # FASCICULE DE BREVET EUROPÉEN

(45) Date de publication du fascicule du brevet :
22.09.82

(51) Int. Cl.³ : **F 16 B   7/04, B 60 R   9/04**

(21) Numéro de dépôt : **79400012.5**

(22) Date de dépôt : **05.01.79**

(54) Elément pour la fixation d'un objet long sur une barre, notamment une barre d'une galerie de véhicule.

(30) Priorité : **09.01.78 FR 7800855**

(43) Date de publication de la demande :
**25.07.79 (Bulletin 79/15)**

(45) Mention de la délivrance du brevet :
**22.09.82 Bulletin 82/38**

(84) Etats contractants désignés :
**BE CH DE GB IT NL SE**

(56) Documents cités :
**CH A 371 696**
**CH A 420 884**
**DE A 2 040 962**
**DE A 2 224 856**
**GB A 751 080**

(73) Titulaire : **SOCIETE ANONYME AUTOMOBILES
CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Oger, Louis Gabriel Joseph**
**22, Chemin des Rois**
**F-91170 Viry Chatillon (FR)**

(74) Mandataire : **Boivin, Claude**
**9, rue Edouard-Charton**
**F-78000 Versailles (FR)**

Imprimerie Jouve, 18, rue St-Denis, 75001 Paris, France

EP 0 003 195 B1

**Elément pour la fixation d'un objet long sur une barre, notamment une barre d'une galerie de véhicule**

La présente invention concerne un élément pour la fixation d'un objet long sur une barre, notamment une barre d'une galerie de toit, perpendiculairement à la barre, qui est en matière élastomère et comporte une partie en forme de fourchette destinée à recevoir l'objet et une partie permettant sa fixation sur la barre par serrage.

Pour fixer des objets allongés, par exemple des skis, sur le pavillon d'un véhicule automobile, on utilise des éléments intermédiaires en forme de fourchettes qui se montent soit directement sur les gouttières latérales du pavillon, soit sur des barres transversales déjà fixées sur le pavillon pour le transport des bagages, ces barres pouvant être indépendantes ou faire partie d'une galerie de toit.

Les éléments intermédiaires destinés à être montés sur des barres transversales déjà en place sur le pavillon comportent en général une partie tubulaire dont la section correspond à celle de la barre. On doit, par suite, prévoir des éléments intermédiaires particuliers pour chaque section de barre. Le brevet anglais 751 080 décrit un élément intermédiaire de ce genre qui est muni d'une fente permettant le passage d'une bande dont les extrémités sont fixées sur le pavillon.

On connaît déjà des éléments pour la fixation d'un objet long sur une barre, notamment sur une galerie de toit, qui sont en matière élastomère et comportent une partie en forme de fourchette destinée à recevoir l'objet et une partie permettant sa fixation sur la barre par serrage (demandes de brevet allemand publiées 2040962 et 2224856) ; dans ces éléments connus, la partie de fixation est placée, par rapport à la barre, du côté opposé à l'objet. Mais, si une certaine tolérance dans les dimensions transversales de la barre est possible, cette tolérance est relativement faible et l'élément ne peut être monté sur une barre de section notablement différente de celle de la barre pour laquelle il a été prévu.

La présente invention a pour but de remédier à cette difficulté et de réaliser un élément qui puisse être utilisé sur toutes les barres habituellement employées quelle que soit la forme de leur section.

L'élément selon l'invention est caractérisé en ce que, à l'état non monté, il se présente sous la forme d'un bloc dont chacune des portions d'extrémité est en forme de fourchette et dont la partie centrale propre à être cambrée autour de la barre constitue la partie de fixation sur cette barre, par enveloppement partiel de ladite barre, et en ce que des moyens de fixation, disposés par rapport à la barre du même côté que l'objet, relient lesdites portions d'extrémité, ce qui a pour effet d'une part de maintenir la partie centrale à l'état cambré et d'autre part de fixer l'élément sur la barre.

L'élément de fixation selon l'invention n'acquiert sa configuration géométrique opérationnelle qu'au moment de la pose et ne conserve cette configuration que grâce à sa fixation sur la barre. Quelle que soit la section de la barre, les parties de maintien de l'élément font saillie sur le haut par rapport à cette barre et permettent la fixation de l'objet. Un même type d'élément peut donc être monté sur des barres de section différente.

La région médiane du bloc comporte de préférence un évidement s'étendant sur toute la largeur de ce bloc ; cet évidement facilite le cambrage de l'élément sur la barre tout en permettant aux extrémités en forme de fourchette d'avoir une épaisseur suffisante pour être relativement rigides.

Les portions d'extrémité de l'élément peuvent être munies de trous qui viennent en regard les uns des autres quand l'élément est cambré et permettent le passage d'organes d'assemblage constituant les moyens de fixation des portions d'extrémité de l'élément cambré.

On a décrit ci-après, à titre d'exemple non limitatif, un mode de réalisation de l'élément de fixation selon l'invention, avec référence aux dessins annexés dans lesquels :

la Figure 1 est une vue en plan de l'élément non monté,

la Figure 2 en est une coupe transversale suivant II-II de la figure 1,

les Figures 3 à 5 montrent la mise en place de l'élément sur une barre de support de bagages,

la Figure 6 montre un organe d'assemblage,

la Figure 7 montre en perspective l'élément de fixation monté sur une barre de support de bagages,

la Figure 8 montre en plan un objet fixé à l'aide d'éléments selon l'invention,

la Figure 9 montre en plan un sandow de fixation,

la Figure 10 est une vue en perspective d'un élément de fixation monté sur une barre et assurant la fixation d'un objet.

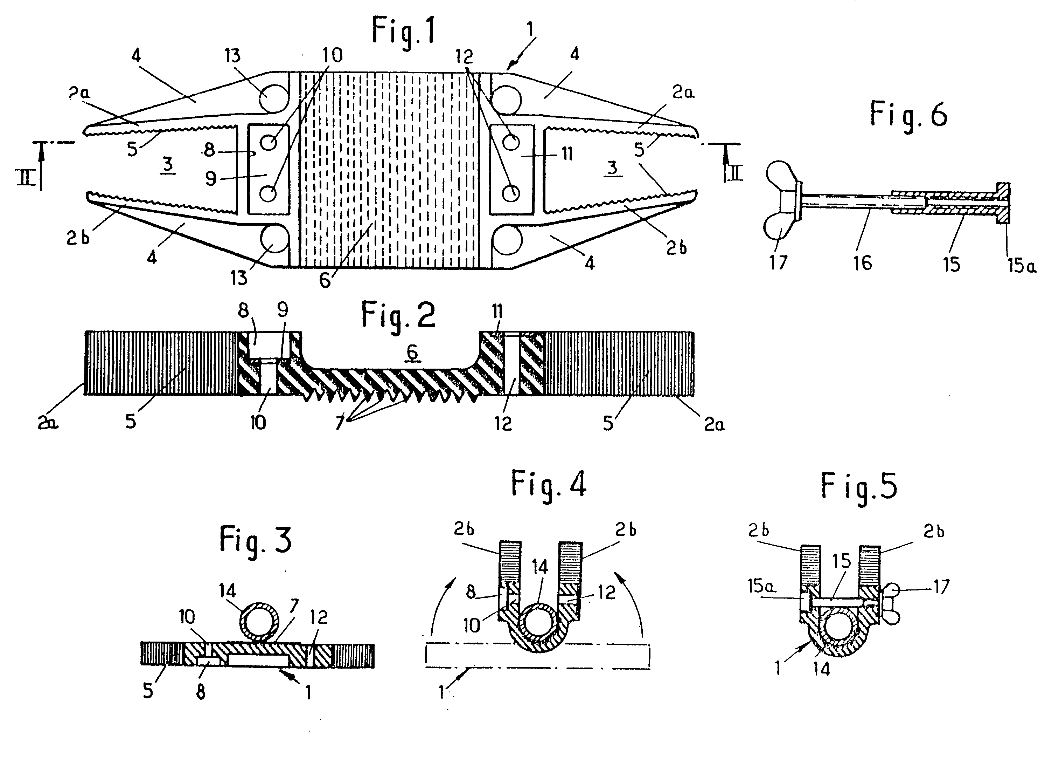

Tel qu'il est représenté aux figures 1 et 2, l'élément de fixation se présente, quand il n'est pas posé, sous la forme d'un bloc 1, en matière souple, par exemple en caoutchouc, dont chacune des extrémités longitudinales est en forme de fourchette et comprend deux becs 2a et 2b convergeant vers l'extérieur et délimitant une échancrure 3. Chacun de ces becs est évidé extérieurement, de manière à ne laisser subsister qu'une nervure dorsale médiane 4, et sa paroi intérieure est agencée pour être anti-dérapante, en étant, par exemple, munie de striures 5.

La région médiane du bloc 1 comporte un évidement 6 s'étendant sur toute la largeur du bloc et sa face extérieure opposée à l'évidement est munie de striures transversales 7, sur une longueur sensiblement égale à celle de l'évidement.

Entre cette région médiane et l'une des extrémités en forme de fourchette, le bloc 1 comporte, sur sa face munie de l'évidement 6, une cavité 8, dont le fond est renforcé par une plaque métallique 9 et est traversé de deux trous 10. De l'autre côté de sa partie médiane, le bloc 1 ne comporte pas de cavité ; il est simplement muni d'une plaque de renforcement métallique 11 et est percé de deux trous 12 symétriques des trous 10 par rapport au plan médian transversal du bloc.

Enfin, chacune des nervures 4 est percée d'un orifice 13, à sa base.

Pour mettre en place l'élément sous une barre 14 qui peut être, par exemple, l'une des barres transversales d'une galerie de toit ou une barre support de bagages, on le dispose sous cette barre perpendiculairement à elle, de façon que sa région médiane striée 7 se trouve au contact de la barre (Figure 3). Puis on replie le bloc 1 autour de cette barre de façon que ses extrémités en forme de fourchette soient pratiquement verticales et parallèles l'une à l'autre (Figure 4) ; cette opération est facilitée par la présence de l'évidement 6.

Les trous 10 et 12 se trouvant alignés, on relie l'une à l'autre les deux portions d'extrémité du bloc 1 à l'aide d'organes d'assemblage introduites dans ces trous. Dans l'exemple de réalisation représenté aux figures 4 à 7, chacun des organes d'assemblage est constitué par une douille taraudée 15 munie d'une tête cylindrique 15a et dans laquelle peut être vissée une tige filetée 16 solidaire d'un moyen de préhension 17, réalisé par exemple sous la forme d'un papillon. On enfile la douille 15 dans un trou 10, puis dans le trou 12 qui lui fait face de manière que sa tête 15a vienne se loger dans la cavité 8, en appui sur la plaque 9. Puis on visse la tige 16 dans la douille jusqu'à ce que le papillon 17 se trouve en butée contre la plaque 11. (Figure 5). La réaction élastique du bloc 1 joue le rôle de frein d'écrou et empêche un dévissage intempestif du papillon 17.

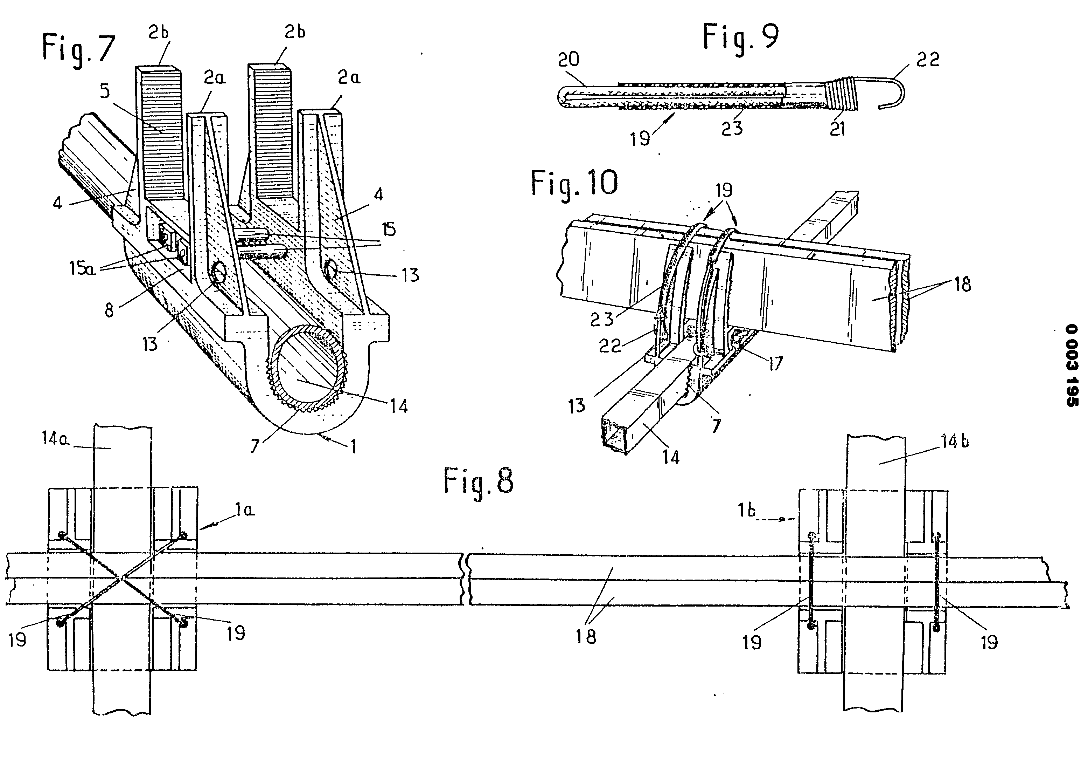

Dans la pratique, on monte deux éléments 1a et 1b sur deux barres parallèles 14a et 14b, comme on le voit à la Figure 8. Les quatre fourchettes des deux éléments sont parallèles entre elles.

Il ne reste plus qu'à disposer dans les fourchettes l'objet 18 à transporter, par exemple une paire de skis, et à fixer cet objet aux éléments 1a et 1b par des liens souples et/ou élastiques 19 engagés à travers les orifices 13. On peut, à cet effet, utiliser des sandows tels que celui représenté à la Figure 9. Ce sandow est formé par une boucle en caoutchouc 20 dont les deux brins sont fixés à une même tête 21 munie d'un crochet 22 et qui est recouverte sur presque toute sa longueur, à l'état non tendu, par une gaine 23 en matière plastique. On introduit ce sandow dans un trou 13 et on forme une boucle en faisant passer le crochet 22 entre les deux brins du sandow. Puis on engage le crochet 22 dans un autre trou 13 en faisant passer le sandow au-dessus de l'objet 18, soit conformément à une diposition diagonale, soit suivant une disposition parallèle (Figure 8 — exemples gauche et droit).

On voit de la description qui précède qu'un même élément 1 peut être monté sur des barres 14 de section variable. Mais si un élément est destiné à être utilisé avec une barre de section donnée, il y a avantage à ce que la douille 15 ait une longueur telle que le papillon 17 ne se trouve au contact de l'extrémité de cette douille qu'à partir du moment où les deux extrémités de l'élément sont parallèles ; la mise en place de l'élément en est facilitée. Il va de soi que la présente invention ne doit pas être considérée comme limitée au mode de réalisation décrit et représenté, mais en couvre, au contraire, toutes les variantes.

## Revendications

1. Elément pour la fixation d'un objet long (18) sur une barre (14), notamment une barre d'une galerie de véhicule, perpendiculairement à la barre, qui est en matière élastomère et comporte une partie en forme de fourchette destinée à recevoir l'objet et une partie permettant sa fixation sur la barre par serrage, caractérisé en ce que l'élément se présente à l'état non monté sous la forme d'un bloc dont chacune des portions d'extrémité est en forme de fourchette (2a-2b) et dont la partie centrale propre à être cambrée autour de la barre 14, consitue la partie de fixation sur cette barre, par enveloppement partiel de ladite barre, et en ce que des moyens de fixation (15, 16, 17), disposés par rapport à la barre (14) du même côté que l'objet (18), relient lesdites portions d'extrémité, ce qui a pour effet d'une part de maintenir la partie centrale à l'état cambré et d'autre part de fixer l'élément sur la barre (14).

2. Elément selon la revendication 1, caractérisé en ce que les becs (2a-2b) de la fourchette convergent vers l'extérieur.

3. Elément selon la revendication 1 ou 2, caractérisé en ce que chacun des becs (2a-2b) est évidé extérieurement de manière à ne laisser subsister qu'une nervure dorsale médiane (4).

4. Elément selon la revendication 3, caractérisé en ce que la nervure (4) est munie d'un trou ou orifice (13) pour le passage ou l'accrochage d'un lien de maintien de l'objet sur le bloc.

5. Elément selon l'une quelconque des revendications 1 à 4, caractérisé en ce que la paroi intérieure de chacun des becs est antidérapante, par exemple en étant munie de striures (5).

6. Elément selon l'une quelconque des revendications 1 à 5, caractérisé en ce que la région médiane du bloc comporte un évidement (6) s'étendant sur toute la largeur de ce bloc.

7. Elément selon la revendication 6, caractérisé en ce que la face extérieure du bloc opposée à l'évidement est muni de striures transversales (7), de préférence sur une longueur sensiblement égale à celle de l'évidement.

8. Elément selon l'une des revendications précédentes, caractérisé en ce que ses portions d'extrémité sont munies de trous (10-12) qui viennent en regard les uns des autres quand l'élément est cambré et permettent le passage d'organes d'assemblage (15-16), constituant les moyens de fixation des portions d'extrémité de l'élément cambré.

9. Elément selon la revendication 8, caractérisé en ce que chaque organe d'assemblage est constitué par une douille taraudée (15) dans laquelle peut être vissée une tige filetée (16) solidaire d'un organe de préhension (17).

10. Elément selon l'une des revendications 1 à 8, et la revendication 9, caractérisé en ce que la douille taraudée (15) est munie d'une tête élargie (15a) et en ce que l'une des portions d'extrémité du bloc comporte une cavité (8) pour le logement de cette tête.

## Claims

1. Member for securing an elongate object (18) on to a bar (14), in particular a bar of a roof-rack of a vehicle, perpendicularly to the bar, which is of an elastomer material and comprises a part in the form of a bifurcated member intended to receive the object and a part enabling it to be secured on the bar by gripping action, characterised in this that the member has in its de-mounted condition the form of a block of which each of the end portions is in the form of a bifurcated member (2a-2b) and of which the central part is adapted to be bent about the bar (14), constitutes the securing part on this bar, by partial surrounding of the said bar, and in this that the securing means (15, 16, 17) disposed with respect to the bar (14) on the same side as the object (18), connects the said end portions, which acts on the one hand to hold the central part in a bent condition and on the other hand to secure the member on to the bar (14).

2. Member according to claim 1, characterised in this that the jaws (2a-2b) of the bifurcated member converge outwardly.

3. Member according to claim 1 or 2, characterised in this that each of the jaws (2a-2b) is hollow externally so as to leave only a central dorsal rib (4).

4. Member according to claim 3, characterised in this that the rib (4) is provided with a hole or orifice (13) for the passage or the engagement of a holding strap for the object on to the block.

5. Member according to any one of claims 1 to 4, characterised in this that the internal wall of each of the jaws is made non-slip, for example by being provided with serrations (5).

6. Member according to any one of claims 1 to 5, characterised in this that the median zone of the block comprises a recess (6) extending over the whole of the breadth of the block.

7. Member according to claim 6, characterised in this that the internal face of the block opposed to the recess is provided with transverse serrations (7), preferably over a length substantially equal to that of the recess.

8. Member according to any of the preceding claims, characterised in this that its end portions are provided with holes (10-12) which come to face one another when the member is bent and enable the passage of assembling members (15-16), constituting securing means for end portions of the bent member.

9. Member according to claim 8, characterised in this that each assembling member is constituted by a screw-threaded bush (15) into which there can be screwed a screw-threaded rod (16) rigid with a gripping member (17).

10. Member according to one of claims 1 to 8 and claim 9, characterised in this that the screw-threaded bush (15) is provided with an enlarged head (15a) and in this that one of the end portions of the block comprises a cavity (8) for receiving this head.

## Ansprüche

1. Vorrichtung für die Befestigung eines langen Gegenstandes (18) auf einer Stange (14), insbesondere auf einer Stange eines Gepäckträgers eines Kraftfahrzeuges quer zu dieser Stange, wobei die Vorrichtung aus Elastomermaterial besteht und einen Teil in Form einer Gabel zum Aufnehmen des Gegenstandes und einen Teil zu ihrer Befestigung mittels Festklemmen an der Stange aufweist, dadurch gekennzeichnet, daß die Vorrichtung im nicht zusammengebauten Zustand die Form eines Blockes aufweist, dessen jeweiliger äußerer Bereich eine Gabelform (2a-2b) hat und dessen Zentralteil um die Stange (14) herum gekrümmt werden kann, um durch teilweises Umschließen der Stange den Befestigungsteil an der Stange zu bilden, und daß Befestigungsmittel (15, 16, 17), die bezüglich der Stange (14) auf der gleichen Seite wie der Gegenstand (18) angeordnet sind, die äußeren Bereiche miteinander verbinden, um einerseits das Zentralteil im gebogenen Zustand zu halten und andererseits die Vorrichtung and der Stange (14) zu befestigen.

2. Vorrichtung nach Anspruch 1, dadurch gekennzeichnet, daß die Backen (2a-2b) der Gabel nach außen hin konvergieren.

3. Vorrichtung nach Anspruch 1 oder 2, dadurch gekennzeichnet, daß die Backen (2a-2b) außen so ausgeformt sind, damit ein Stegmittelrücken (4) vorhanden bleibt.

4. Vorrichtung nach Anspruch 3, dadurch gekennzeichnet, daß der Steg (4) mit einem Loch oder einer Öffnung (13) zur Durchführung oder zum Verhaken eines Verbindungsbandes zum Halten des Gegenstandes am Block versehen ist.

5. Vorrichtung nach einem der Ansprüche 1 bis 4, dadurch gekennzeichnet, daß die Innenseite jedes Backens (2a-2b) rutschfest ist, z.B. mit Streifen (5) versehen ist.

6. Vorrichtung nach einem der Ansprüche 1 bis 5, dadurch gekennzeichnet, daß der mittlere Bereich des Blockes eine Vertiefung (6) aufweist, die sich über die gesamte Breite des Blockes erstreckt.

7. Vorrichtung nach Anspruch 6, dadurch gekennzeichnet, daß die zur Vertiefung entgegengesetzte Außenseite des Blockes mit Querriefen (7), vorzugsweise über eine im wesentlichen gleiche Länge wie die der Vertiefung, versehen ist.

8. Vorrichtung nach einem der Ansprüche 1 bis 7, dadurch gekennzeichnet, daß ihre äußeren Bereiche mit Löchern (10-12) versehen sind, die bei umgebogener Vorrichtung einander gegenüberliegen und die das Durchführen von Mitteln (15-16), die die Befestigungsmittel der äußeren Bereiche der umgebogenen Vorrichtung bilden, zum Zusammenbau ermöglichen.

9. Vorrichtung nach Anspruch 8, dadurch gekennzeichnet, daß das Mittel zum Zusammenbau (15-16) aus einer Gewindehülse (15) besteht, in die ein mit einer Griffeinrichtung (17) verbundener Schraubenbolzen (16) geschraubt sein kann.

10. Vorrichtung nach einem der Ansprüche 1 bis 8, dadurch gekennzeichnet, daß die Gewindehülse (15) mit einem breiteren Kopf (15a) versehen ist, und daß einer der äußeren Bereiche des Blockes eine Vertiefung (8) zur Aufnahme des Kopfes aufweist.

Fig. 6

Fig. 5

Fig. 1

Fig. 2

Fig. 4

Fig. 3

Fig. 7

Fig. 9

Fig. 10

Fig. 8

0 003 195